# EUROPÄISCHE PATENTANMELDUNG

(11) **EP 1 702 777 A2**
(43) Veröffentlichungstag der Anmeldung: **20.09.2006**
(21) Anmeldenummer: 06004095.3
(22) Anmeldetag: 01.03.2006
(51) Int. Cl.: B60J 7/00

(54) **Cabriolet-Fahrzeug mit oberhalb einer hinteren Sitzreihe ablegbaren Dachteilen**

(30) Priorität: 15.03.2005 DE 102005011818
(71) Anmelder: Wilhelm Karmann GmbH, 49084 Osnabrück (DE)
(72) Erfinder: Theuerkauf, Jürgen, 49565 Bramsche (DE)

(57) **Zusammenfassung**

Ein Cabriolet-Fahrzeug (1) mit mehreren bei geschlossenem Dach (2) hintereinander folgenden und jeweils in sich starren Dachteilen (5;7;8), die insbesondere bei geöffnetem Dach (2) zumindest bereichsweise oberhalb einer hinteren Sitzreihe (R) ablegbar sind, wird so ausgebildet, dass der hinterste (5) der Dachteile (5;7;8) zu seiner Öffnung aus seiner geschlossenen Stellung mit einer nach vorne (F) weisenden Komponente verlagerbar ist.

## Beschreibung

Die Erfindung betrifft ein Cabriolet-Fahrzeug mit mehreren bei geschlossenem Dach hintereinander folgenden Dachteilen, die bei geöffnetem Dach insbesondere zumindest bereichsweise oberhalb einer hinteren Sitzreihe ablegbar sind, nach dem Oberbegriff des Anspruchs 1.

Es ist bekannt, Kraftfahrzeuge mit mehreren hintereinander liegenden und beispielsweise jeweils plattenförmigen oder zumindest jeweils einen starren Rahmen ausbildenden beweglichen Dachteilen zu versehen und diese oberhalb einer hinteren Sitzreihe abzulegen, da das Fahrzeug in Offenstellung ohnehin zumeist nur von ein oder zwei Personen genutzt wird und der Kofferraum von den abgelegten Dachteilen dann nur wenig beeinträchtigt sein muss.

Die DE 101 52 944 A1 zeigt die nahezu horizontale und gleichsinnig orientierte Ablage von zwei Dachteilen oberhalb einer eingeklappten Rückbank, wobei zur Verschachtelung der Dachteile zunächst ein Aufschwenken des hinteren Dachteils in eine gegenüber seiner geschlossenen Stellung steilere Position erforderlich ist. Dabei taucht das hintere, untere Ende des hinteren Dachteils in die Karosserie ein, was die verbleibende Größe des Kofferraums verringert. Zudem findet in Längsrichtung während der Ablage durch das Abwärtsschwenken des dort mit dem Bezugszeichen 6b versehenen Hebels eine leichte Heckwärtsverlagerung des hinteren Dachteils statt, was nur möglich ist, wenn heckwärts anschließend noch weiterer Karosserieraum, etwa ein Stufenheck, zur Verfügung steht. Dadurch ist die dort gezeigte Kinematik nicht auf die räumlichen Verhältnisse von Kompaktwagen ohne Stufenheck übertragbar, bei denen wie in einer vollständig geschlossenen Version auch in einer Cabriolet-Version der hinterste Dachteil sich zumindest nahezu bis zu dem hinteren Abschluss der Karosserie erstrecken soll. Eine solche Kinematik würde dort dazu führen, dass das Dach in geöffneter Stellung über das Heck hinausragen müsste.

Der Erfindung liegt das Problem zugrunde, auch bei Fahrzeugen ohne Stufenheck eine Dachablage zumindest im Wesentlichen oberhalb von hinteren Sitzen oder in einem räumlich ähnlich gelegenen Abschnitt des Fahrzeugs zu ermöglichen.

Die Erfindung löst dieses Problem durch ein Cabrioletfahrzeug mit den Merkmalen des Anspruchs 1. Hinsichtlich vorteilhafter Ausgestaltungen und Weiterbildungen der Erfindung wird auf die weiteren Ansprüche 2 bis 11 verwiesen.

Mit der Erfindung kann das hinterste Dachende in geschlossener Stellung bis zum hintersten Karosserieende gezogen sein. Es muss aufgrund der Vorwärtsverlagerbarkeit des hinteren Dachendes kein Stufenheck oder auch nur Stufenheckansatz vorgesehen sein, so dass eine typische Klein- oder Kompaktwagenlinienführung voll übernommen werden kann.

Wenn der hinterste Dachteil aus seiner geschlossenen Stellung zunächst anhebbar ist und die hinterste Dachkante nicht an der Karosserie festgehalten wird, kann zum Beispiel auch eine Hutablage in Höhe einer Fensterbrüstungslinie von dem hintersten Dachteil überlaufen werden. Ein den Kofferraum störendes Abtauchen von Dachteilen in die Karosserie kann ganz vermieden werden, solange das Dach noch nicht so weit vorne in der Bewegung angekommen ist, dass es oberhalb der hinteren Sitzreihe - und damit ebenfalls ohne Beeinträchtigung des Kofferraums - absenkbar ist, insbesondere wenn die hinterste Kante des hintersten Dachteils zumindest bis dicht vor Erreichen der abgelegten Stellung oberhalb einer Fensterbrüstungslinie der Karosserie verbleibt. Zudem kann eine solche Bewegung insgesamt über ein oder mehrere Gelenkanordnungen ohne etwa Schiebekulissen bewirkbar sein.

Wenn der hinterste Dachteil um zumindest 20 Zentimeter nach vorne verlagerbar ist, ist in jedem Fall eine Kofferraumverkleinerung minimiert. Insbesondere kann praktisch die ganze Kofferraumtiefe etwa eines Kompaktwagens von dem Dachteil vor seiner Absenkung überlaufen werden.

Es ist für eine verkantungsfreie durchgehende und flüssige Bewegung des hintersten Dachteils auf einer Bahnkurve ohne zwischenzeitliches Abstoppen und gegensinniges Schwenken günstig, wenn dieser an einem Mehrgelenk, zum Beispiel einem mechanisch und fertigungstechnisch einfachen Viergelenk, gegenüber der Karosserie gehalten ist.

Die Vorwärts- und Aufwärtsbewegung kann dann über Lenker des Mehrgelenks bewirkt werden, die bei geschlossenem Dach von ihrer karosserieseitigen Anlenkung aus mit einer heckwärts gerichteten Komponente und bei geöffnetem Dach mit einer vorwärts gerichteten Komponente erstreckt sind und dabei den hintersten Dachteil auf einer Bahnkurve vorwärts und zunächst aufwärts verlagern und ihn erst nach hinreichender Vorwärtsverlagerung in die Karosserie absenken.

Wenn zumindest drei Dachteile vorgesehen sind, die bei geschlossenem Dach hintereinander folgen, ist die Erstreckung jedes einzelnen Dachteils in Fahrzeuglängsrichtung gering, so dass für die Ablage der Dachteile der Raum oberhalb der hinteren Sitzreihe ausreichen kann und die Dachteile nicht nach hinten in den Kofferraum ragen müssen.

Eine geringe Bauhöhe des abgelegten Pakets aus Dachteilen lässt sich dabei dadurch erreichen, dass die Dachteile vorteilhaft bei geöffnetem Dach gleichsinnig ineinander verschachtelt sind, wobei der hinterste Dachteil über den anderen im Bereich der Fensterbrüstungslinie liegen und mit seiner Außenseite schützend nach oben zeigen kann. Ein zusätzlicher Deckel darüber ist dann entbehrlich.

Für eine schnelle und synchron mit der Bewegung des hintersten Dachteils stattfindende Einfaltung des oder der vorgeordneten Dachteil(e) können diese an den hintersten Dachteil gelenkig angehängt und während dessen Öffnungsbewegung unter diesen einschachtelbar sein.

Die Rückbank kann bei geöffneten Dachteilen in Originalorientierung verbleiben und lediglich eine Sitzlehne zur Freigabe eines Aufnahmeraums für die Dachteile vorzuklappen sein, was die Dachöffnung vereinfacht und insbesondere die Möglichkeit bietet, preisgünstige Fahrzeuge anzubieten, bei denen zum Beispiel die Rücklehne manuell umgelegt werden muss, ohne dass dabei ein Zusatzaufwand auch für ein Umlegen der Rückbank erforderlich wäre.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine schematische, vorne abgebrochene Seitenansicht eines erfindungsgemäßen Cabriolet-Fahrzeugs mit genau drei Dachteilen bei geschlossenem Dach,
- Fig. 2: eine ähnliche Ansicht wie Fig. 1 während der beginnenden Dachöffnung mit gleichzeitigem Vorwärts- und Aufwärtsbewegen des hinteren Dachteils und Einschachteln der vorgeordneten Dachteile,

- Fig. 3: eine ähnliche Ansicht wie Fig. 2 während der weiteren Dachöffnung, wobei der hinterste Dachteil ungefähr in seiner höchsten über die Fensterbrüstungslinie hinausgehobenen Stellung steht,
- Fig. 4: eine ähnliche Ansicht wie Fig. 3 während der weiteren Dachöffnung und beginnender Abwärtsverlagerung des hintersten Dachteils, der jedoch noch oberhalb der Fensterbrüstungslinie steht,
- Fig. 5: eine ähnliche Ansicht wie Fig. 4 bei vollständig unterhalb der Fensterbrüstungslinie abgelegtem Dach.

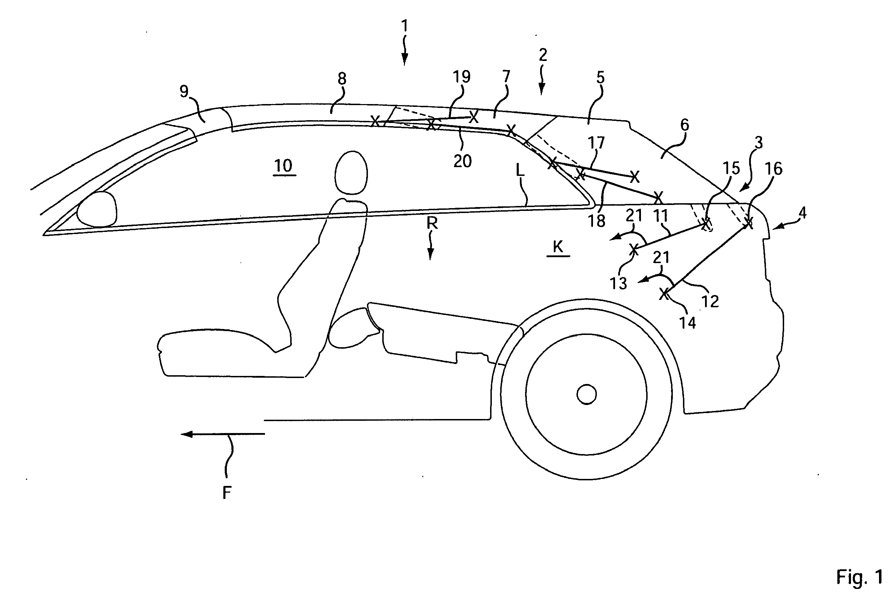

Das in der Zeichnung dargestellte Cabriolet-Fahrzeug 1 ist beispielhaft mit einer hinteren Sitzreihe R versehen und bildet im geschlossenen Zustand ein vier- oder mehrsitziges Fahrzeug aus. Dieses ist hier nach Art eines Kompaktfahrzeugs ausgebildet und muss keinerlei Stufenheck oder Stufenheckansatz zeigen. Das hintere Ende 3 des insgesamt beweglichen Daches 2 kann daher bündig mit dem Heck 4 der Karosserie K abschließen (Fig. 1), was besondere Freiheit bei dem Design des Fahrzeugs 1 eröffnet.

Das Dach 2 umfasst in Fahrtrichtung F zwei dem hintersten Dachteil 5, der eine Heckscheibe 6 umfasst, vorgeordnete bewegliche Dachteile 7, 8, die wie der hinterste Dachteil 5 in sich jeweils starr sind. Der vorderste Dachteil 8 schließt in geschlossener Stellung mittelbar oder unmittelbar an einen Windschutzscheibenrahmen 9 an. Beide Dachteile 7, 8 können mit zumindest jeweils einem starren Rahmen versehen sein oder feste Plattenteile ausbilden, wobei in dem ersten Dachteil 8 auch ein Schiebedach enthalten sein kann (nicht gezeichnet), das über oder unter den weiteren Dachteil 7 geschoben werden kann. Für ein gutes Raumgefühl auch im geschlossenen Zustand können die Dachteile 7, 8 zumindest im Wesentlichen transparent ausgebildet sein. Auch eine Außenfläche aus Metallblech oder Kunststoff ist natürlich möglich.

Im gezeichneten Ausführungsbeispiel liegen die Dachteile 7, 8 in geschlossener Stellung (Fig. 1) im wesentlichen horizontal oder nur gering geneigt oberhalb eines Fahrzeuginnenraums 10.

Die hier insgesamt drei Dachteile 5, 7, 8 können manuell oder voll- oder teilautomatisch zu bewegen sein.

Der hinterste Dachteil 5 ist an einem Viergelenk mit seitlichen Lenkern 11, 12 gegenüber der Karosserie K gehalten, die jeweils über oberhalb oder wie hier optisch verdeckt unterhalb einer Fensterbrüstungslinie L und karosseriefest gelegene Gelenke 13, 14 mit horizontal und quer zum Fahrzeug 1 liegenden Drehachsen beweglich sind. Anderenends sind die Lenker 11, 12 an Halterungen 15, 16 mit dem Dachteil 5 verbunden.

Die Lenker 11, 12 weisen bei geschlossenem Dach 2 eine von ihren karosserieseitigen Anlenkungen 13, 14 aus heckwärts und aufwärts gerichtete Erstreckung zu den festen Halterungen 15, 16 an dem Dachteil 5 auf.

An diesen ist über ein weiteres Mehrgelenk, hier Viergelenk, über die Lenker 17, 18 ein vorgeordneter Dachteil 7 relativbeweglich angehängt. An diesen ist in ähnlicher Weise über die Lenker 19, 20 der vorderste Dachteil 8 angehängt. Auch hier sind die Verbindungen nur angedeutet.

Eine Heckklappe des Fahrzeugs 1 kann einteilig in der Karosserie K oder mehrteilig ausgebildet sein und dann zum Beispiel eine beweglich in dem Dachteil 5 gehaltene Heckscheibe 6 umfassen, die beispielsweise nach oben öffnet, während ein unterer Klappenteil der Karosserie K nach unten öffnet.

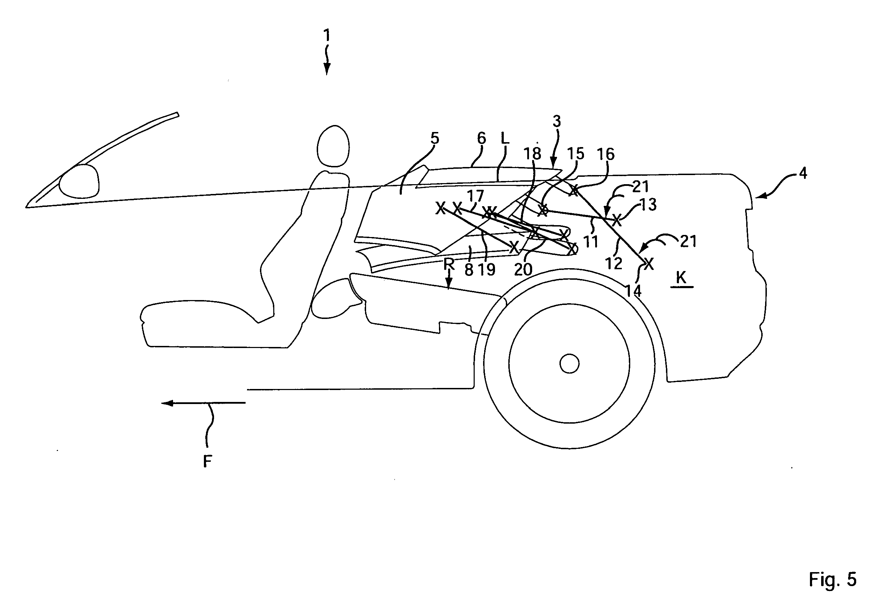

Im geöffneten Zustand der Dachteile 5, 7, 8 sind diese oberhalb einer hinteren Sitzreihe R des Fahrzeugs 1 ablegbar (Fig. 5), wobei die Rückbank selbst in Originalorientierung verbleibt und lediglich eine Sitzlehne zur Freigabe eines Aufnahmeraums für die Dachteile 5, 7, 8 vorzuklappen ist. Das Umklappen der Sitzlehne kann manuell oder automatisiert erfolgen, wobei der abgeklappte Zustand über einen Mikroschalter oder dergleichen Sicherungsabfrage vor Absenkung der Dachteile 5, 7, 8 gewährleistet sein kann.

Zur Öffnung des Daches 2 nach Umklappen der Rücksitzlehne(n) werden zunächst die Lenker 11, 12 in Richtung der Pfeile 21 um die karosseriefesten Gelenke 13, 14 vorwärts und aufwärts verschwenkt, wobei der hintere Dachteil 5 von der Fensterbrüstungslinie L angehoben und mit einer Komponente in Fahrtrichtung F verlagert wird. Die Vorwärtsverlagerung beträgt hier mehrere zehn Zentimeter, so dass während der Verlagerung die Erstreckungstiefe einer im geschlossenen Zustand des Daches im Bereich der Fensterbrüstungslinie L zwischen der aufgerichteten hinteren Sitzlehne und der Unterkante der Heckscheibe 6 befindliche Hutablage vollständig überlaufen werden kann. Je nach Fahrzeug kann auch eine Vorwärtsverlagerung von etwa 20 Zentimetern ausreichend sein.

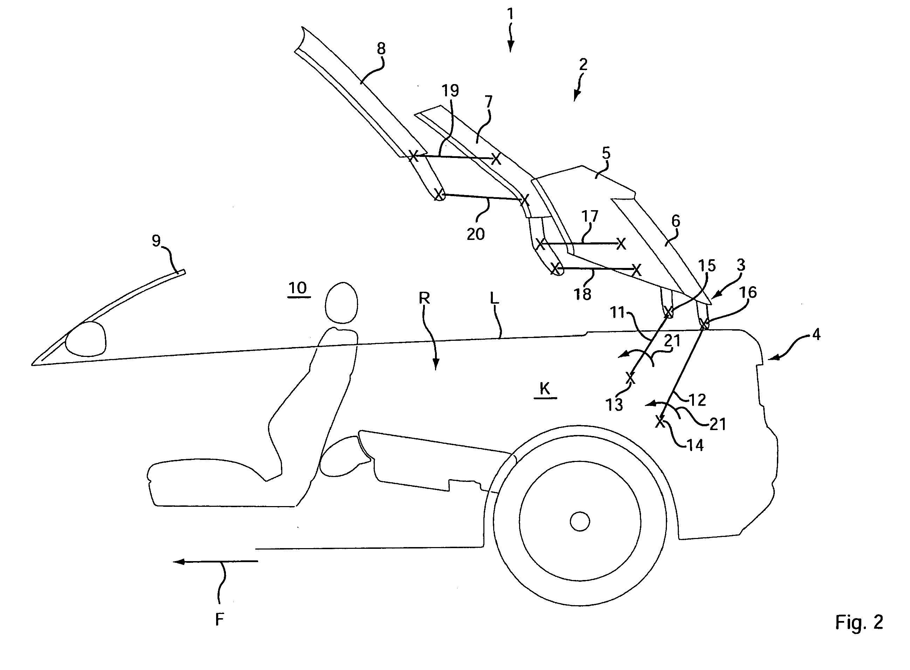

Die vorgeordneten Dachteile 7, 8 werden parallel mit der Bewegung des hintersten Dachteils 5 unter diesen geschachtelt (Fig. 2 ff.), was entweder über eigene Antriebe oder Kopplungen mit dem Hauptantrieb bewirkt werden kann. Dieses Einschachteln der vorgeordneten Dachteile 7, 8 kann sich während der gesamten Öffnungsbewegung des Daches 2 fortsetzen, so dass an deren Ende die Dachteile 7, 8 gleichsinnig gewölbt unterhalb des schützend darüber gehaltenen hinteren Dachteils 5 liegen können.

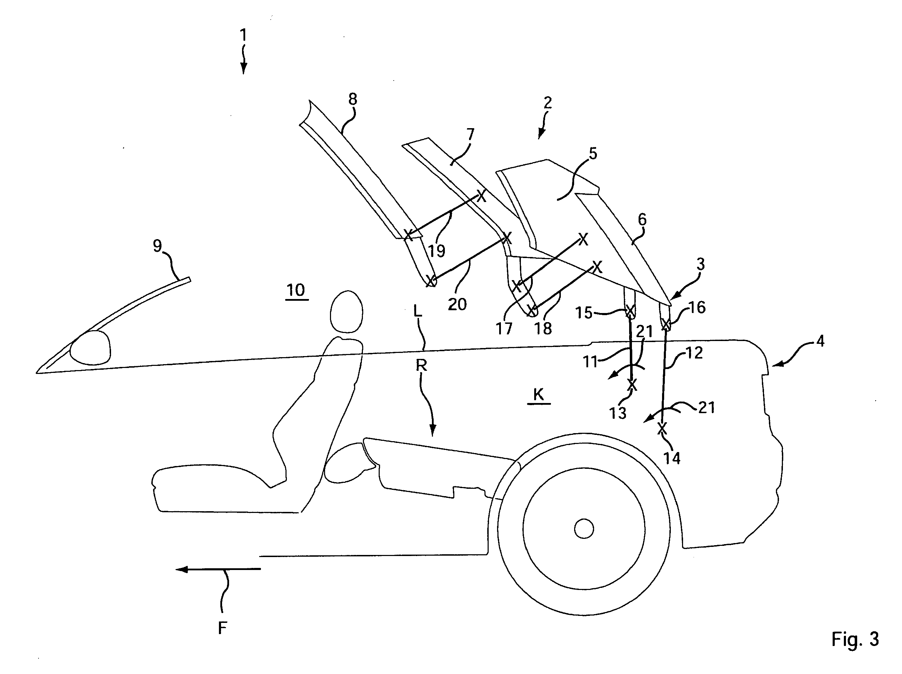

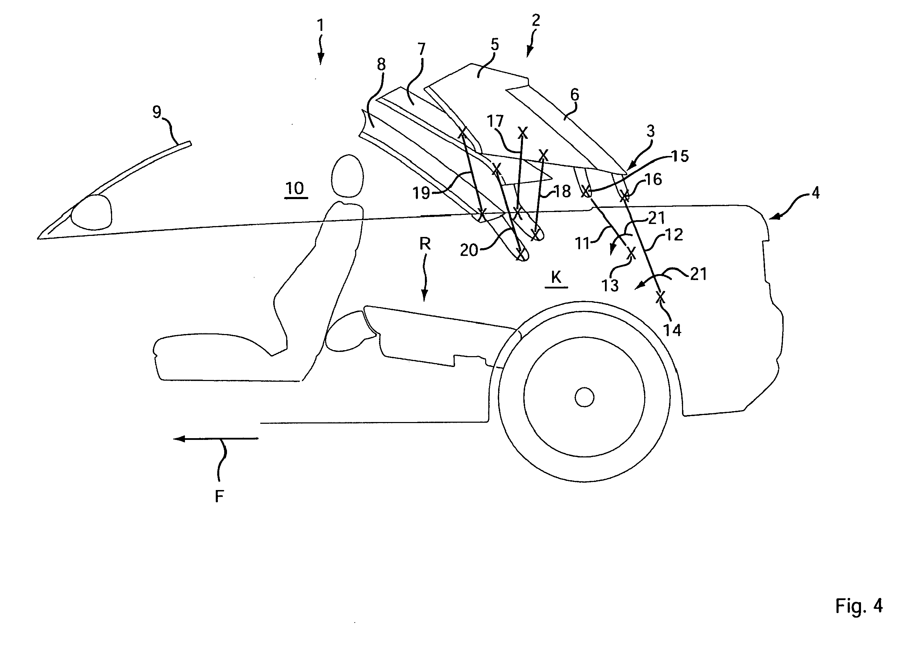

In der Zwischenstellung nach Fig. 3 stehen die Lenker 10, 11 zumindest nahezu vertikal, wodurch der hintere Dachteil 5 hier seine höchste Position erreicht und bei weiterer Vorwärtsverlagerung (Fig. 4, Fig. 5) abgesenkt und erst am Schluss (kurz vor Erreichen der Stellung nach Fig. 5) nach vorne unter die Fensterbrüstungslinie L verschwenkt wird.

Die Lenker 11, 12 weisen dann eine in Fahrtrichtung F nach vorne weisende Erstreckungskomponente von ihren karosserieseitigen Anlenkungen 13, 14 auf, haben also gemäß der Zeichnung während der Dachöffnungsbewegung einen Winkel von deutlich mehr als 90° durchlaufen, was grundsätzlich nicht zwingend ist. Auch könnte der Winkel kleiner sein, wenn beispielsweise die Gelenke 13, 14, 15, 16 insgesamt verschieblich wären.

Bei einem erfindungsgemäßen Fahrzeug bleibt mit der erheblichen Vorwärtsverlagerung des sich öffnenden Daches 2 der Kofferraum in der Größe entsprechend einem Fahrzeug mit geschlossenem Dach zumindest nahezu voll erhalten. Es ist natürlich auch möglich, die Erfindung auch auf Fahrzeuge mit einem längeren Heck anzuwenden, um eine maximale Kofferraumtiefe auch bei offenem Dach zu erhalten.

## Patentansprüche

1. Cabriolet-Fahrzeug (1) mit mehreren bei geschlossenem Dach (2) hintereinander folgenden und jeweils in sich starren Dachteilen (5;7;8), die insbesondere bei geöffnetem Dach (2) zumindest bereichsweise oberhalb einer hinteren Sitzreihe (R) ablegbar sind,
**dadurch gekennzeichnet,**
**dass** der hinterste (5) der Dachteile (5;7;8) zu seiner Öffnung aus seiner geschlossenen Stellung mit einer nach vorne (F) weisenden Komponente verlagerbar ist.

2. Cabriolet-Fahrzeug (1) nach Anspruch 1,
**dadurch gekennzeichnet,**
**dass** der hinterste Dachteil (5) aus seiner geschlossenen Stellung zunächst anhebbar ist.

3. Cabriolet-Fahrzeug (1) nach einem der Ansprüche 1 oder 2, **dadurch gekennzeichnet,**
**dass** der hinterste Dachteil (5) um eine in etwa der Tiefe einer Hutablage entsprechende Strecke nach vorne (F) verlagerbar ist.

4. Cabriolet-Fahrzeug (1) nach einem der Ansprüche 1 bis 3,
**dadurch gekennzeichnet,**
**dass** der hinterste Dachteil (5) um zumindest 20 Zentimeter nach vorne verlagerbar ist.

5. Cabriolet-Fahrzeug (1) nach einem der Ansprüche 1 bis 4, **dadurch gekennzeichnet,**
**dass** der hinterste Dachteil (5) an einem Mehrgelenk (13;14;15;16) gegenüber der Karosserie (K) gehalten ist und zu seiner Öffnung eine kombinierte Vorwärts-und zunächst aufwärts gerichtete Bewegung durchführt.

6. Cabriolet-Fahrzeug (1) nach Anspruch 5,
**dadurch gekennzeichnet,**
**dass** der hinterste Dachteil (5) zumindest bis dicht vor Erreichen der abgelegten Stellung oberhalb einer Fensterbrüstungslinie (L) der Karosserie (K) verbleibt.

7. Cabriolet-Fahrzeug (1) nach einem der Ansprüche 5 oder 6, **dadurch gekennzeichnet,**
**dass** der hinterste Dachteil (5) an einem um quer zum Fahrzeug liegende Achsen beweglichen Viergelenk (13;14;15;16) gehalten ist.

8. Cabriolet-Fahrzeug (1) nach einem der Ansprüche 5 bis 7, **dadurch gekennzeichnet,**
**dass** das Mehrgelenk (13;14;15;16) von karosserieseitigen Anlenkungen (13;14) unterhalb der Fensterbrüstungslinie (L) zu dem hintersten Dachteil erstreckte Lenker (10;11) umfasst, die bei geschlossenem Dach (2) von ihren karosserieseitigen Anlenkungen (13;14) aus mit einer heckwärts gerichteten Komponente und bei geöffnetem Dach (2) mit einer vorwärts gerichteten Komponente erstreckt sind.

9. Cabriolet-Fahrzeug (1) nach einem der Ansprüche 1 bis 8, **dadurch gekennzeichnet,**
**dass** genau drei Dachteile (8;7;5) vorgesehen sind, die bei geschlossenem Dach (2) hintereinander folgen.

10. Cabriolet-Fahrzeug (1) nach einem der Ansprüche 1 bis 9, **dadurch gekennzeichnet,**
**dass** die Dachteile (8;7;5) bei geöffnetem Dach (2) gleichsinnig ineinander verschachtelt sind.

11. Cabriolet-Fahrzeug (1) nach einem der Ansprüche 1 bis 10, **dadurch gekennzeichnet,**
**dass** die Karosserie (K) mit dem hintersten Dachteil (5) verbunden ist und die vorgeordneten Dachteile (7;8) an diesen gelenkig angehängt und während der Öffnungsbewegung unter diesen einschachtelbar sind.
